# FASCICULE DE BREVET EUROPEEN

(11) **EP 3 927 587 B1**
(45) Date de publication et mention de la délivrance du brevet: **01.05.2024**
(21) Numéro de dépôt: 20702671.7
(22) Date de dépôt: 07.02.2020
(51) Int. Cl.: B60W 30/08, B60W 30/095, B60W 30/10, B60W 30/18, B60W 50/14

(54) **PROCÉDÉ DE SÉCURISATION D'UN VÉHICULE**
VERFAHREN ZUR SICHERUNG EINES FAHRZEUGS
METHOD FOR SECURING A VEHICLE

(30) Priorité: 21.02.2019 FR 1901777
(43) Date de publication de la demande: 29.12.2021
(73) Titulaire: Ampere SAS, 92100 Boulogne-Billancourt (FR)
(72) Inventeur: DEBORNE, Renaud, 78150 LE CHESNAY (FR)
(74) Mandataire: Renault Group
(86) Numéro de dépôt international: PCT/EP2020/053096
(87) Numéro de publication internationale: WO 2020/169362

(56) Documents cités:
- EP-A1- 1 028 241
- DE-A1-102015 120 996
- FR-A1- 2 787 586
- US-A1- 2018 061 253

## Description

L'invention concerne un procédé de sécurisation d'un véhicule, notamment un véhicule automobile à conduite assistée ou à conduite autonome. L'invention porte aussi sur un dispositif de sécurisation destiné à être utilisé dans un véhicule automobile, et comprenant des moyens de mettre en oeuvre un tel procédé. L'invention porte encore sur un véhicule automobile comprenant un tel dispositif de sécurisation. L'invention porte également sur un programme d'ordinateur mettant en oeuvre un tel procédé. L'invention porte encore sur un support d'enregistrement sur lequel est enregistré un tel programme. L'invention porte enfin sur un signal d'un support de données, portant un tel programme.

Les exigences en termes de sécurité liées à la circulation des véhicules à conduite autonome ou à conduite assistée sont élevées. Par véhicules à « conduite assistée », on entend des véhicules disposant d'un système d'aide à la conduite de type régulateur de vitesse adaptatif, désigné par l'acronyme d'origine anglo-saxonne ACC (« Adaptive Cruise Control », contrôle de vitesse adaptatif).

Une difficulté liée à la circulation d'un véhicule à conduite autonome ou à conduite assistée est la suivante. Il est possible que la voie de circulation où se trouve un tel véhicule soit dégagée, en cas de trafic fluide sur cette voie, mais que les files adjacentes, gauche et/ou droite, soient embouteillées. Une telle situation peut être observée sur les autoroutes urbaines ou sur les périphériques. La présence d'une voie d'accès ou de sortie peut être à l'origine de ces phénomènes. Il en résulte que l'écart de vitesse entre les flux des véhicules sur les différentes voies de circulation peut être élevé. Ainsi, un véhicule autonome ou un véhicule muni d'un dispositif de type régulateur de vitesse peut être amené à circuler à une vitesse de consigne élevée alors que les véhicules sur les voies adjacentes circulent à vitesse faible ou sont à l'arrêt. Il existe alors un risque élevé de collision si un véhicule change de voie subitement.

Il existe des systèmes de détection de « cut-in » selon une terminologie anglo-saxonne, c'est-à-dire de détection de changement de file d'un véhicule qui vient alors se positionner sur la voie de circulation d'un véhicule à conduite autonome ou à conduite assistée. De tels systèmes implémentent différents critères à base notamment de prédiction de trajectoire des véhicules sur les voies adjacentes, comme décrit dans le document « Cutting-in Vehicle Recognition for ACC Systems - Towards Feasible Situation Analysis Méthodologie » (Ismail Dagli et al.).

Toutefois, ces solutions présentent des inconvénients. En particulier, de tels systèmes de détection de « cut-in » sont inefficaces dans les situations de remontée de file tant que l'un au moins des véhicules dans la file adjacente arrêtée ou fortement ralentie ne présente pas, de manière individuelle, de risque de changement de voie lié à sa trajectoire. Le véhicule à conduite autonome ou assistée remonte alors la file sans ralentir. Il en résulte un risque élevé de collision dans le cas où un des véhicules changerait de voie de circulation.

Le document EP 1 028 241 A1 divulgue un procédé présentant des inconvénients similaires.

Le but de l'invention est de fournir un dispositif et un procédé de sécurisation remédiant aux inconvénients ci-dessus et améliorant les dispositifs et procédés connus de l'art antérieur.

Selon l'invention, un procédé de sécurisation d'un véhicule hôte circulant sur une voie d'évolution d'une infrastructure routière comprenant au moins une voie adjacente à ladite voie d'évolution, comprend les étapes suivantes, pour chaque voie adjacente :
- détection d'une pluralité de véhicules présents sur la voie adjacente, incluant une estimation d'au moins une information relative à chaque véhicule détecté, dont la vitesse ;
- les véhicules détectés formant un flux de véhicules, détermination d'une valeur représentative de la vitesse du flux sur la voie adjacente, par exemple la vitesse moyenne ;
- comparaison de la vitesse du véhicule hôte avec la valeur représentative de la vitesse du flux de véhicules sur la voie adjacente ; et si la vitesse du véhicule hôte est supérieure d'un seuil prédéterminé à la valeur représentative de la vitesse du flux de véhicules sur la voie adjacente, détection d'une situation à risque pour le véhicule hôte.

Le procédé peut comprendre une étape de transmission d'une alerte au conducteur par une interface homme machine en cas de détection d'une situation à risque pour le véhicule hôte.

Le procédé peut comprendre, en cas de détection d'une situation à risque pour le véhicule hôte, une étape de calcul d'une valeur cible de vitesse pour le véhicule hôte correspondant à la vitesse du véhicule hôte diminuée d'une quantité, destinée à réduire le risque encouru par le véhicule hôte.

Le procédé peut comprendre en outre :
- une étape de réduction automatique de la vitesse du véhicule hôte à ladite valeur cible de vitesse du véhicule hôte ; ou
- une étape de proposition au conducteur du véhicule hôte d'une consigne de vitesse égale à ladite valeur cible de vitesse du véhicule hôte, et, si le conducteur accepte la proposition, une étape de réduction de la vitesse du véhicule hôte à ladite valeur de consigne.

Pour chaque voie adjacente, la détection peut comprendre en outre une estimation de la distance entre le véhicule hôte et les véhicules détectés. Dans l'étape de calcul de la valeur cible de vitesse pour le véhicule hôte, ladite quantité peut être déterminée en fonction de la distance du véhicule hôte aux véhicules détectés sur la voie adjacente.

Dans l'étape de comparaison de la vitesse du véhicule hôte avec la valeur représentative de la vitesse du flux de véhicules sur la voie adjacente, ledit seuil prédéterminé peut dépendre de la vitesse du véhicule hôte.

Le procédé peut comprendre en outre une étape de changement de voie d'évolution du véhicule hôte en cas de détection d'une situation à risque pour le véhicule hôte.

L'invention concerne également un dispositif de sécurisation destiné à être utilisé dans un véhicule hôte, le dispositif de sécurisation comprenant des éléments matériels et/ou logiciels mettant en oeuvre le procédé tel que défini précédemment, notamment des éléments matériels et/ou logiciels conçus pour mettre en oeuvre le procédé tel que défini précédemment, et/ou le dispositif comprenant des moyens de mettre en oeuvre le procédé tel que défini précédemment.

Le dispositif peut comprendre :
- un système de détection apte à la détection d'une pluralité de véhicules présents sur l'au moins une voie adjacente, et à l'estimation d'au moins une information, notamment la vitesse, relative à chaque véhicule détecté ;
- un calculateur apte à la détermination d'une valeur représentative de la vitesse du flux de véhicules sur l'au moins une voie adjacente ;
- un système d'arbitrage de vitesse apte à la comparaison de la vitesse du véhicule hôte avec la valeur représentative de la vitesse du flux de véhicules sur chaque voie adjacente, et au calcul d'une valeur cible de vitesse pour le véhicule hôte correspondant à la vitesse du véhicule hôte diminuée d'une quantité ;
- une interface homme-machine apte à l'émission d'une alerte à destination du conducteur du véhicule hôte.

L'invention concerne encore un véhicule comprenant un dispositif de sécurisation tel que défini précédemment.

Les dessins annexés représentent, à titre d'exemple, un mode de réalisation d'un dispositif de sécurisation selon l'invention et un mode d'exécution d'un procédé de sécurisation selon l'invention.
[Fig. 1] La figure 1 représente de façon schématique une infrastructure routière comprenant plusieurs voies de circulation.
[Fig. 2] La figure 2 représente un ordinogramme d'un mode d'exécution d'un procédé de sécurisation d'un véhicule.
[Fig. 3] La figure 3 représente un mode de réalisation d'un dispositif de sécurisation d'un véhicule.

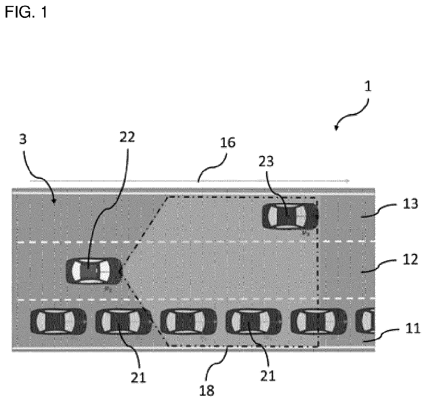

Un exemple d'une infrastructure routière 1 est décrit ci-après en référence à la figure 1.

L'infrastructure routière 1 comprend au moins un tronçon de route 3, ou chaussée. Le tronçon de route 3 comprend par exemple trois voies de circulation 11, 12, 13. Le tronçon de route 3 peut également comprendre plus de trois voies de circulation.

Un véhicule 22, dit véhicule hôte, est équipé d'un dispositif de sécurisation selon l'invention. Un tel dispositif de sécurisation sera décrit plus en détails ci-après. Le véhicule hôte 22 est par exemple un véhicule à conduite assistée, disposant d'un système d'aide à la conduite de type régulateur de vitesse adaptatif, notamment de type ACC, ou un véhicule à conduite autonome.

Le véhicule hôte 22 évolue par exemple sur la voie de circulation 12, centrale. On appelle « voie d'évolution » la voie sur laquelle évolue le véhicule hôte 22. On suppose que le véhicule 22 reste sur la voie d'évolution 12.

On appelle « voies adjacentes » les voies pouvant exister à gauche et à droite de la voie d'évolution 12. Dans l'exemple de la figure 1, il existe deux voies adjacentes à la voie d'évolution 12 du véhicule hôte 22, la voie de circulation 11 à droite de la voie d'évolution 12, et la voie de circulation 13 à gauche de la voie d'évolution 12. Le sens de circulation des véhicules est indiqué par la flèche 16 sur la figure 1.

L'exemple de la figure 1 illustre une situation dans laquelle le trafic est congestionné sur la voie de droite 11, le trafic est fluide sur la voie centrale d'évolution 12 du véhicule hôte 22, et le trafic est également fluide sur la voie de gauche 13. La vitesse des véhicules 21 circulant sur la voie de droite 11 est faible, par exemple de l'ordre de 10 km/h. La vitesse du véhicule hôte 22 est élevée, par exemple de l'ordre de 90 km/h. La vitesse des véhicules 23 circulant sur la voie de gauche 13 est élevée, par exemple de l'ordre de 110 km/h.

L'invention vise à utiliser des informations, notamment obtenues grâce à des radars ou des caméras, pour identifier l'état du trafic, en particulier la vitesse des flux de circulation, sur les voies adjacentes à la voie d'évolution d'un véhicule hôte, et à proposer une réduction de vitesse au véhicule hôte en fonction de la vitesse des flux de véhicules sur les voies adjacentes pour sécuriser la situation initialement à risque du véhicule hôte. Ceci permet en effet d'éviter ou de minimiser le risque d'une collision avec un véhicule des voies adjacentes qui changerait de voie. Ceci permet donc de sécuriser les situations dites de « remonte-file ».

L'invention n'a pas pour objectif de détecter ou de prédire un « cut-in », c'est-à-dire un changement de voie d'un véhicule d'une voie adjacente qui viendrait se positionner sur la voie d'évolution du véhicule hôte. Par contre, un procédé de sécurisation d'un véhicule du type de celui qui va être décrit ci-après peut être mis en oeuvre en complément d'un mécanisme de détection de « cut-in ».

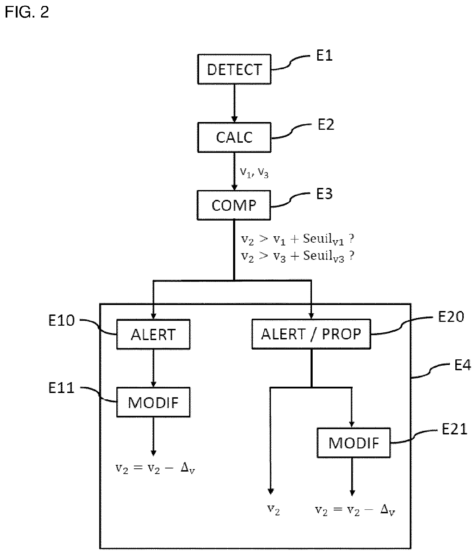

Un mode d'exécution d'un procédé de sécurisation d'un véhicule hôte 22 est décrit ci-après en référence à la figure 2.

Dans une première étape E1 (DETECT), on réalise la détection de véhicules 21, 23 présents sur les voies adjacentes 11, 13 à la voie d'évolution 12 du véhicule hôte 22. On réalise en outre la détection d'au moins une information, notamment la vitesse, relative aux véhicules 21, 23 détectés sur l'au moins une voie adjacente 11, 13. Une information détectée supplémentaire peut être la distance entre le véhicule hôte 22 et chaque véhicule détecté 21, 23. On réalise par exemple une estimation de la vitesse, et optionnellement de la distance, relative à chaque véhicule détecté.

Dans une deuxième étape E2 (CALC), pour chaque voie adjacente 11, 13, on peut réaliser une estimation de la vitesse moyenne des véhicules 21, 23 sur la voie adjacente 11, 13. Pour chaque voie adjacente 11, 13, les véhicules détectés formant un flux de véhicules, on détermine une valeur représentative de la vitesse v₁, v₃ du flux de véhicules sur la voie adjacente 11, 13, par exemple à partir de l'estimation de la vitesse moyenne des véhicules 21, 23 sur la voie adjacente 11, 13. On détermine par exemple la vitesse v₁ du flux de véhicules sur la voie de droite 11, et la vitesse v₃ du flux de véhicules sur la voie de gauche 13.

Par « vitesse du flux de véhicules » ou « valeur représentative de la vitesse du flux de véhicules », on peut par exemple entendre la vitesse moyenne des différents véhicules détectés sur une même voie de circulation adjacente, ou encore la vitesse médiane. Par « vitesse médiane », on entend une valeur de vitesse telle que le nombre de véhicules, détectés par le véhicule hôte, ayant une vitesse supérieure à cette valeur est égale au nombre de véhicules ayant une vitesse inferieure à cette même valeur.

Dans une troisième étape E3 (COMP), on compare la vitesse v₂ du véhicule hôte 22 avec la vitesse v₁, v₃ du flux de véhicules de chaque voie adjacente 11, 13.

Pour chaque voie adjacente 11, 13, on définit préalablement un seuil. On appelle Seuilᵥ₁ le seuil de la voie adjacente 11 et Seuilᵥ₃ le seuil de la voie adjacente 13.

Pour chaque voie adjacente 11, 13, on compare la vitesse v₂ du véhicule hôte 22 avec la somme v₁+Seuilᵥ₁, v₃+Seuilᵥ₃ de la vitesse v₁, v₃ du flux de véhicules de la voie adjacente 11, 13 et du seuil correspondant Seuilᵥ₁, seuilᵥ₃.

De préférence, les seuils Seuilᵥ₁ et Seuilᵥ₃ correspondant respectivement à la voie adjacente de droite 11 et de gauche 13 sont calibrables, sous forme de données paramétrables du procédé, de préférence non accessibles au conducteur.

Les seuils Seuilᵥ₁, Seuilᵥ₃ de chaque voie adjacente 11, 13 peuvent être des constantes prédéfinies, ou selon une variante préférée seront variables et seront choisis en fonction du contexte, notamment de la vitesse v₂ du véhicule hôte 22, et éventuellement de la distance du véhicule hôte aux véhicules adjacents détectés.

Si, pour au moins une voie adjacente 11, 13, la vitesse v₂ du véhicule hôte 22 est supérieure à la somme v₁+Seuilᵥ₁, v₃+Seuilᵥ₃ de la vitesse v₁, v₃ du flux de véhicules de la voie adjacente 11, 13 et du seuil correspondant Seuilᵥ₁, Seuilᵥ₃, alors on considère qu'il existe une situation de danger, une situation à risque. Le procédé de sécurisation met donc en oeuvre une première phase de détection d'une situation dangereuse. Cette situation survient particulièrement lorsque les véhicules d'une certaine voie adjacente circulent à faible vitesse.

Dans une quatrième étape E4, qui représente une deuxième phase du procédé de sécurisation, le procédé permet de rétablir une situation de sécurité. Une solution repose notamment sur la réalisation d'un ajustement de la vitesse du véhicule hôte 22, automatique ou par simple suggestion au conducteur.

L'étape E4 peut être réalisée selon différentes variantes en fonction du mode de conduite, notamment autonome ou assisté, du véhicule hôte 22. Le procédé comprend de préférence dans tous les cas une première sous-étape E10, E20 de transmission d'une alerte au conducteur, de la situation dangereuse détectée.

Le procédé met en oeuvre une autre sous-étape de calcul d'une nouvelle valeur, dite valeur cible, de vitesse pour le véhicule hôte 22, correspondant à la vitesse v₂ du véhicule hôte diminuée d'une quantité Δᵥ.

La quantité Δᵥ pourra par exemple être déterminée en fonction de la distance du véhicule hôte aux véhicules à faible vitesse détectés sur la voie adjacente. Plus la distance entre le véhicule hôte et les véhicules détectés sur la voie adjacente est élevée, plus la quantité Δᵥ est faible. Le risque encouru par le véhicule hôte est faible car les véhicules détectés sont éloignés. Plus la distance entre le véhicule hôte et les véhicules détectés sur la voie adjacente est faible, plus la quantité Δᵥ est élevée, et tend vers sa valeur maximale. En effet, le risque encouru par le véhicule hôte est élevé.

En conduite autonome, dans une sous-étape E11 de l'étape E4, la vitesse du véhicule hôte 22 est ajustée automatiquement, selon la relation v₂=v₂- Δᵥ. La vitesse du véhicule hôte 22 est réduite automatiquement d'une quantité Δᵥ déterminée lors de l'étape E3. Dans la sous-étape E10 de l'étape E4, le conducteur du véhicule hôte 22 est alerté que cette nouvelle consigne de vitesse a été appliquée au véhicule.

En conduite assistée, dans une sous-étape E20 de l'étape E4, on alerte le conducteur que, pour au moins une voie adjacente 11, 13, la vitesse v₂ du véhicule hôte 22 est supérieure à la somme v₁+Seuilᵥ₁, v₃+Seuilᵥ₃ de la vitesse v₁, v₃ du flux de véhicules de la voie adjacente 11, 13 et du seuil correspondant Seuilᵥ₁, Seuilᵥ₃. Une nouvelle consigne de vitesse v₂=v₂- Δᵥ est proposée au conducteur. Si le conducteur accepte cette nouvelle consigne de vitesse, elle est alors appliquée au véhicule dans une sous-étape E21 de l'étape E4, ce qui permet de réduire la vitesse du véhicule hôte 22 d'une quantité Δᵥ déterminée lors de l'étape E3. Si le conducteur n'accepte pas cette nouvelle consigne de vitesse, la vitesse du véhicule hôte 22 reste inchangée.

Dans le cas de l'exemple de la figure 1, dans la deuxième étape E2, on estime la vitesse v₁ du flux de véhicules sur la voie de droite 11. Comme la vitesse v₂ du véhicule hôte 22 est supérieure à la vitesse v₁ des véhicules sur la voie de droite 11, on diminue d'une certaine quantité Δᵥ la consigne de vitesse v₂ du système de conduite autonome ou du régulateur de vitesse adaptatif du véhicule hôte 22. Par exemple, la vitesse v₂ du véhicule hôte 22 est diminuée d'une quantité Δᵥ de l'ordre de 30 km/h. La réduction de la vitesse du véhicule hôte 22 est réalisée de façon automatique en mode de conduite autonome et sur confirmation du conducteur en mode de conduite assistée.

Grâce à un procédé du type de celui décrit en relation avec la figure 2, le conducteur du véhicule hôte 22 est alerté lorsque des flux de véhicules sur les voies adjacentes présentent un écart de vitesse élevé avec la vitesse du véhicule hôte 22. Ces alertes permettent de prévenir le conducteur du véhicule hôte d'une situation potentiellement à risque, ce qui maintient voire augmente son niveau de vigilance. Un tel procédé permet notamment de sécuriser les situations de remonte-file.

Un procédé du type de celui décrit en relation avec la figure 2 peut de plus avoir pour deuxième effet de réduire la vitesse du véhicule hôte, même si aucun véhicule ne se trouve dans sa voie d'évolution. Un tel procédé permet d'anticiper et de réduire les effets d'un potentiel freinage dans le cas de l'insertion d'un véhicule changeant de voie de circulation, en provenance de la voie adjacente à plus faible vitesse. Dans l'exemple de la figure 1, les véhicules 21, 23 des voies adjacentes 11, 13 qui sont détectés lors de l'étape E1 du procédé sont ceux se trouvant entre les pointillés 18. Par exemple, si l'étape E1 du procédé permet de détecter des véhicules dans les voies adjacentes sur une durée de 2 secondes, le véhicule hôte 22 pourra tirer parti de cette durée pour commencer son ralentissement afin d'aborder les véhicules sur les voies adjacentes avec un écart de vitesse compatible avec les critères définis précédemment.

Un avantage d'un procédé de sécurisation d'un véhicule du type de celui décrit en relation avec la figure 2 est lié au fait qu'il permet au conducteur du véhicule de mieux anticiper un événement potentiellement à risque, par exemple un véhicule qui change de voie, ou une portière qui s'ouvre si un flux de véhicule sur une voie adjacente est détecté à l'arrêt.

Un autre avantage d'un procédé de sécurisation d'un véhicule du type de celui décrit en relation avec la figure 2 est lié au fait qu'il permet de réduire l'écart de vitesse du véhicule hôte avec tout véhicule des voies adjacentes susceptible de changer de voie. Il en résulte une réduction des effets d'une éventuelle collision.

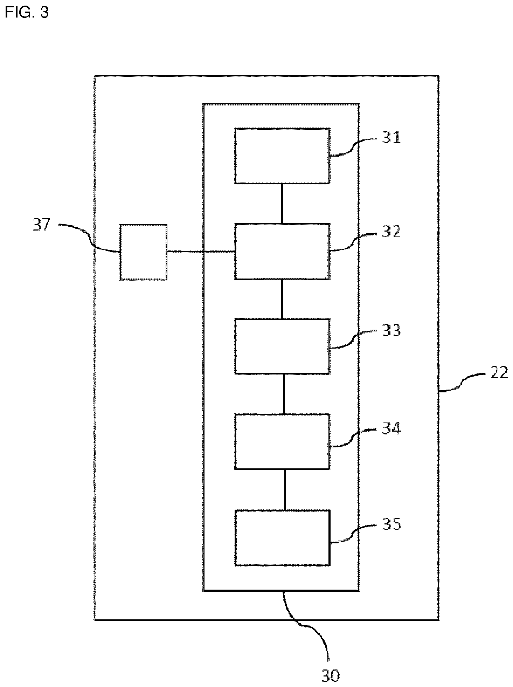

Un mode de réalisation d'un dispositif de sécurisation 30 d'un véhicule 22 est décrit ci-après en référence à la figure 3.

Le dispositif de sécurisation 30 comprend des éléments 31, 32, 33, 34, 35, 37 matériels et/ou logiciels mettant en oeuvre ou régissant un procédé de sécurisation du type de celui décrit ci-dessus. En particulier, le dispositif de sécurisation 30 comprend les éléments matériels et/ou logiciels permettant de mettre en oeuvre les étapes du procédé sécurisation d'un véhicule hôte 22. Ces différents éléments peuvent comprendre des modules logiciels.

Par exemple, les éléments matériels et/ou logiciels peuvent comprendre tout ou partie des éléments suivants :
un système de détection 31 ;
un calculateur 32 ;
un système d'arbitrage de vitesse 33 ;
une interface homme-machine (IHM) 34 ;
une mémoire 35.

Le système de détection 31 permet de détecter les véhicules présents sur les différentes voies de circulation, notamment sur la voie d'évolution 12 et sur les voies adjacentes 11, 13. Le système de détection 31 permet de détecter au moins une information, notamment la vitesse et/ou la distance, relative aux véhicules 21, 23 détectés sur l'au moins une voie adjacente 11, 13.

Le système de détection 31 peut comprendre un radar et/ou une caméra.

Il est envisageable d'utiliser, en complément des informations fournies par le système de détection 31, des informations relatives à l'état du trafic, notamment issues de la cartographie. Le véhicule hôte 22 peut comprendre avantageusement une base de données cartographiques 37.

Le calculateur 32 permet d'estimer la vitesse moyenne des véhicules 21, 23 sur l'au moins une voie adjacente 11, 13, et de déterminer la vitesse v₁, v₃ du flux de véhicules correspondant.

Le système d'arbitrage de vitesse 33 permet de déterminer, à partir de la vitesse v₂ du véhicule hôte 22 et de la vitesse v₁, v₃ du flux de véhicules sur l'au moins une voie adjacente 11, 13 fournie par le calculateur 32, la nouvelle consigne de vitesse à appliquer au véhicule hôte 22.

L'interface homme-machine (IHM) 34 permet, en mode de conduite autonome, d'alerter le conducteur du véhicule hôte 22 qu'une nouvelle consigne de vitesse est appliquée. L'interface homme-machine (IHM) 34 permet, en mode de conduite assistée, d'alerter le conducteur du véhicule hôte 22 lorsque des flux de véhicules sur les voies adjacentes présentent un écart de vitesse élevé avec la vitesse du véhicule hôte 22, et de proposer au conducteur une nouvelle consigne de vitesse.

Un procédé et un dispositif de sécurisation ont été décrits ci-dessus dans le cas d'un véhicule automobile. Un tel procédé et un tel dispositif de sécurisation pourront être utilisés dans d'autres types de transport routier, par exemple dans des deux-roues, des bus, ou des véhicules de transport de marchandises.

## Revendications

1. Procédé de sécurisation d'un véhicule hôte (22) circulant sur une voie d'évolution (12) d'une infrastructure routière (1) comprenant au moins une voie adjacente (11 ; 13) à ladite voie d'évolution, le procédé de sécurisation comprenant les étapes suivantes, pour chaque voie adjacente :
- détection (E1) d'une pluralité de véhicules (21 ; 23) présents sur la voie adjacente (11 ; 13), incluant une estimation d'au moins une information relative à chaque véhicule détecté, dont la vitesse ;
- les véhicules détectés formant un flux de véhicules, détermination (E2) d'une valeur représentative de la vitesse du flux (v₁ ; v₃) sur la voie adjacente, par exemple la vitesse moyenne des véhicules détectés (21, 23) ;
- le procédé étant **caractérisé en ce qu'**il inclut une étape de comparaison (E3) de la vitesse du véhicule hôte (v₂) avec la valeur représentative de la vitesse du flux de véhicules (v₁ ; v₃) sur la voie adjacente ; et
si la vitesse du véhicule hôte (v₂) est supérieure d'un seuil prédéterminé (Seuilᵥ₁, Seuilᵥ₃) à la valeur représentative de la vitesse du flux de véhicules (v₁ ; v₃) sur la voie adjacente, détection d'une situation à risque pour le véhicule hôte (22).

2. Procédé selon la revendication précédente, **caractérisé en ce qu'**il comprend une étape (E10 ; E20) de transmission d'une alerte au conducteur par une interface homme machine en cas de détection d'une situation à risque pour le véhicule hôte (22).

3. Procédé selon l'une des revendications précédentes, **caractérisé en ce qu'**il comprend, en cas de détection d'une situation à risque pour le véhicule hôte (22), une étape de calcul d'une valeur cible de vitesse pour le véhicule hôte correspondant à la vitesse du véhicule hôte (v₂) diminuée d'une quantité (Δᵥ), destinée à réduire le risque encouru par le véhicule hôte (22).

4. Procédé selon la revendication précédente, comprenant en outre :
- une étape de réduction (E11) automatique de la vitesse du véhicule hôte (22) à ladite valeur cible de vitesse du véhicule hôte ; ou
- une étape de proposition au conducteur du véhicule hôte (22) d'une consigne de vitesse égale à ladite valeur cible de vitesse du véhicule hôte, et, si le conducteur accepte la proposition, une étape de réduction (E21) de la vitesse du véhicule hôte (22) à ladite valeur de consigne.

5. Procédé selon l'une quelconque des revendications précédentes, dans lequel, pour chaque voie adjacente (11 ; 13), la détection (E1) comprend en outre une estimation de la distance entre le véhicule hôte (22) et les véhicules détectés (21 ; 23).

6. Procédé selon les revendications 3 et 5, dans lequel, dans l'étape de calcul de la valeur cible de vitesse pour le véhicule hôte (22), ladite quantité (Δᵥ) est déterminée en fonction de la distance du véhicule hôte aux véhicules détectés sur la voie adjacente.

7. Procédé selon l'une quelconque des revendications précédentes, dans lequel, dans l'étape de comparaison (E3) de la vitesse du véhicule hôte (v₂) avec la valeur représentative de la vitesse du flux de véhicules (v₁ ; v₃) sur la voie adjacente (11 ; 13), ledit seuil prédéterminé (Seuilᵥ₁, Seuilᵥ₃) dépend de la vitesse du véhicule hôte (22).

8. Procédé selon l'une des revendications précédentes, comprenant en outre une étape de changement de voie d'évolution du véhicule hôte (22) en cas de détection d'une situation à risque pour le véhicule hôte.

9. Dispositif de sécurisation (30) destiné à être utilisé dans un véhicule hôte (22), le dispositif de sécurisation (30) comprenant des éléments (31, 32, 33, 34, 35, 37) matériels et/ou logiciels mettant en oeuvre le procédé selon l'une des revendications précédentes, notamment des éléments matériels (31, 32, 33, 34, 35, 37) et/ou logiciels conçus pour mettre en oeuvre le procédé selon l'une des revendications précédentes, et/ou le dispositif comprenant des moyens de mettre en oeuvre le procédé selon l'une des revendications précédentes.

10. Dispositif selon la revendication précédente, comprenant :
- un système de détection (31) apte à la détection d'une pluralité de véhicules (21 ; 23) présents sur l'au moins une voie adjacente (11 ; 13), et à l'estimation d'au moins une information, notamment la vitesse, relative à chaque véhicule détecté ;
- un calculateur (32) apte à la détermination d'une valeur représentative de la vitesse du flux de véhicules (v₁ ; v₃) sur l'au moins une voie adjacente ;
- un système d'arbitrage de vitesse (33) apte à la comparaison de la vitesse du véhicule hôte (v₂) avec la valeur représentative de la vitesse du flux de véhicules (v₁ ; v₃) sur chaque voie adjacente, et au calcul d'une valeur cible de vitesse pour le véhicule hôte correspondant à la vitesse du véhicule hôte (v₂) diminuée d'une quantité (Δᵥ) ;
- une interface homme-machine (34) apte à l'émission d'une alerte à destination du conducteur du véhicule hôte.

11. Véhicule comprenant un dispositif de sécurisation selon la revendication 9 ou 10.

## Patentansprüche

1. Verfahren zur Sicherung eines Wirtsfahrzeugs (22), das auf einem Bewegungsfahrstreifen (12) einer Straßeninfrastruktur (1) fährt, die mindestens einen an den Bewegungsfahrstreifen angrenzenden Fahrstreifen (11; 13) enthält, wobei das Sicherungsverfahren für jeden angrenzenden Fahrstreifen die folgenden Schritte enthält:
- Erkennung (E1) einer Vielzahl von auf dem angrenzenden Fahrstreifen (11; 13) vorhandenen Fahrzeugen (21; 23), einschließlich einer Schätzung mindestens einer Information bezüglich jedes erkannten Fahrzeugs, darunter die Geschwindigkeit;
- wenn die erkannten Fahrzeuge einen Strom von Fahrzeugen bilden, Bestimmung (E2) eines für die Geschwindigkeit des Stroms (v₁; v₃) auf dem angrenzenden Fahrstreifen repräsentativen Werts, zum Beispiel die mittlere Geschwindigkeit der erkannten Fahrzeuge (21, 23);
wobei das Verfahren **dadurch gekennzeichnet ist, dass** es einen Schritt des Vergleichs (E3) der Geschwindigkeit des Wirtsfahrzeugs (v₂) mit dem für die Geschwindigkeit des Stroms von Fahrzeugen (v₁; v₃) auf dem angrenzenden Fahrstreifen repräsentativen Wert enthält; und
wenn die Geschwindigkeit des Wirtsfahrzeugs (v₂) um eine vorbestimmte Schwelle (Schwelleᵥ₁, Schwelleᵥ₃) höher ist als der repräsentative Wert der Geschwindigkeit des Stroms von Fahrzeugen (v₁; v₃) auf dem angrenzenden Fahrstreifen, Erkennung einer Gefahrensituation für das Wirtsfahrzeug (22).

2. Verfahren nach dem vorhergehenden Anspruch, **dadurch gekennzeichnet, dass** es im Fall der Erkennung einer Gefahrensituation für das Wirtsfahrzeug (22) einen Schritt (E10; E20) der Übertragung einer Warnung an den Fahrer über eine Mensch-Maschine-Schnittstelle enthält.

3. Verfahren nach einem der vorhergehenden Ansprüche, **dadurch gekennzeichnet, dass** es im Fall der Erkennung einer Gefahrensituation für das Wirtsfahrzeug (22) einen Schritt der Berechnung eines Geschwindigkeitszielwerts für das Wirtsfahrzeug entsprechend der Geschwindigkeit des Wirtsfahrzeugs (v₂) verringert um eine Größe (Δᵥ) enthält, die dazu bestimmt ist, die Gefahr, der das Wirtsfahrzeug (22) ausgesetzt ist, zu reduzieren.

4. Verfahren nach dem vorhergehenden Anspruch, das außerdem enthält:
- einen Schritt der automatischen Reduzierung (E11) der Geschwindigkeit des Wirtsfahrzeugs (22) auf den Geschwindigkeitszielwert des Wirtsfahrzeugs; oder
- einen Schritt des Vorschlags eines Geschwindigkeitssollwerts gleich dem Geschwindigkeitszielwert des Wirtsfahrzeugs an den Fahrer des Wirtsfahrzeugs (22), und wenn der Fahrer den Vorschlag annimmt, einen Schritt der Reduzierung (E21) der Geschwindigkeit des Wirtsfahrzeugs (22) auf den Sollwert.

5. Verfahren nach einem der vorhergehenden Ansprüche, wobei für jeden angrenzenden Fahrstreifen (11; 13) die Erkennung (E1) außerdem eine Schätzung des Abstands zwischen dem Wirtsfahrzeug (22) und den erkannten Fahrzeugen (21; 23) enthält.

6. Verfahren nach den Ansprüchen 3 und 5, wobei im Schritt der Berechnung des Geschwindigkeitszielwerts für das Wirtsfahrzeug (22) die Größe (Δᵥ) abhängig vom Abstand des Wirtsfahrzeugs zu den auf dem angrenzenden Fahrstreifen erkannten Fahrzeugen bestimmt wird.

7. Verfahren nach einem der vorhergehenden Ansprüche, wobei im Schritt des Vergleichs (E3) der Geschwindigkeit des Wirtsfahrzeugs (v₂) mit dem für die Geschwindigkeit des Stroms von Fahrzeugen (v₁; v₃) auf dem angrenzenden Fahrstreifen (11; 13) repräsentativen Wert die vorbestimmte Schwelle (Schwelleᵥ₁, Schwelleᵥ₃) von der Geschwindigkeit des Wirtsfahrzeugs (22) abhängt.

8. Verfahren nach einem der vorhergehenden Ansprüche, das außerdem einen Schritt des Wechsels des Bewegungsfahrstreifens des Wirtsfahrzeugs (22) im Fall der Erkennung einer Gefahrensituation für das Wirtsfahrzeug enthält.

9. Sicherungsvorrichtung (30), dazu bestimmt, in einem Wirtsfahrzeug (22) verwendet zu werden, wobei die Sicherungsvorrichtung (30) Hardware- und/oder Softwareelemente (31, 32, 33, 34, 35, 37) enthält, die das Verfahren nach einem der vorhergehenden Ansprüche durchführen, insbesondere Hardware- (31, 32, 33, 34, 35, 37) und/oder Softwareelemente, die konzipiert sind, das Verfahren nach einem der vorhergehenden Ansprüche durchzuführen, und/oder die Vorrichtung Einrichtungen enthält, um das Verfahren nach einem der vorhergehenden Ansprüche durchzuführen.

10. Vorrichtung nach dem vorhergehenden Anspruch, die enthält:
- ein Erkennungssystem (31), das zur Erkennung einer Vielzahl von Fahrzeugen (21; 23), die auf dem mindestens einen angrenzenden Fahrstreifen (11; 13) vorhanden sind, und zur Schätzung mindestens einer Information, insbesondere der Geschwindigkeit, bezüglich jedes erkannten Fahrzeugs fähig ist;
- einen Rechner (32), der zur Bestimmung eines für die Geschwindigkeit des Stroms von Fahrzeugen (v₁; v₃) auf mindestens einem angrenzenden Fahrstreifen repräsentativen Werts fähig ist;
- ein Geschwindigkeit-Arbitrierungssystem (33), das zum Vergleich der Geschwindigkeit des Wirtsfahrzeugs (v2) mit dem für die Geschwindigkeit des Stroms der Fahrzeuge (v₁; v₃) auf jedem angrenzenden Fahrstreifen repräsentativen Wert und zur Berechnung eines Geschwindigkeitszielwerts für das Wirtsfahrzeug entsprechend der Geschwindigkeit des Wirtsfahrzeugs (v₂) verringert um eine Größe (Δᵥ) fähig ist;
- eine Mensch-Maschine-Schnittstelle (34), die zum Senden einer Warnung an den Fahrer des Wirtsfahrzeugs fähig ist.

11. Fahrzeug, das eine Sicherungsvorrichtung nach Anspruch 9 oder 10 aufweist.

## Claims

1. A method for securing a host vehicle (22) traveling in a traveling lane (12) of a road infrastructure (1) comprising at least one lane (11; 13) adjacent to said traveling lane, the securing method comprising the following steps for each adjacent lane:- detecting (E1) a plurality of vehicles (21; 23) present in the adjacent lane (11, 13), including an estimate of at least one information item relating to each detected vehicle, including the speed,- with the detected vehicles forming a flow of vehicles, determining (E2) a value representing the speed of the flow (v₁, v₃) in the adjacent lane, for example, the average speed of the detected vehicles (21, 23),- the method being **characterized in that** it includes a step of comparing (E3) the speed of the host vehicle (v₂) with the value representing the speed of the flow of vehicles (v₁; v₃) in the adjacent lane, andif the speed of the host vehicle (v₂) is greater than the value representing the speed of the flow of vehicles (v₁; v₃) in the adjacent lane by a predetermined threshold (Thresholdᵥ₁, Thresholdᵥ₃), detecting a hazardous situation for the host vehicle (22).

2. The method as claimed in the preceding claim, **characterized in that** it includes a step (E10; E20) of sending a warning to the driver via a human-machine interface if a situation hazardous for the host vehicle (22) is detected.

3. The method as claimed in one of the preceding claims, **characterized in that** it includes, if a situation hazardous for the host vehicle (22) is detected, a step of calculating a target speed value for the host vehicle corresponding to the speed of the host vehicle (v₂) less a quantity (Δᵥ) that is intended to reduce the risk to the host vehicle (22).

4. The method as claimed in the preceding claim, also including: - a step (E11) of automatically reducing the speed of the host vehicle (22) to said target speed value of the host vehicle, or- a step of suggesting to the driver of the host vehicle (22) a speed setpoint equal to said target speed value of the host vehicle and, if the driver accepts the suggestion, a step (E21) of reducing the speed of the host vehicle (22) to said setpoint value.

5. The method as claimed in any one of the preceding claims, in which, for each adjacent lane (11; 13), detection (E1) also includes an estimate of the distance between the host vehicle (22) and the detected vehicles (21; 23).

6. The method as claimed in claims 3 and 5, in which, in the step of calculating the target speed value for the host vehicle (22), said quantity (Δᵥ) is determined as a function of the distance between the host vehicle and the vehicles detected in the adjacent lane.

7. The method as claimed in any one of the preceding claims, in which, in the step (E3) of comparing the speed of the host vehicle (v₂) with the value representing the speed of the flow of vehicles (v₁; v₃) in the adjacent lane (11; 13), said predetermined threshold (Thresholdᵥ₁, Thresholdᵥ₃) depends on the speed of the host vehicle (22) .

8. The method as claimed in one of the preceding claims, also including a step in which the traveling lane of the host vehicle (22) changes in the event of detection of a hazardous situation for the host vehicle.

9. A securing device (30) intended to be used in a host vehicle (22), the securing device (30) comprising software and/or hardware elements (31, 32, 33, 34, 35, 37) implementing the method as claimed in one of the preceding claims, notably the hardware and/or software elements (31, 32, 33, 34, 35, 37) designed to implement the method as claimed in one of the preceding claims, and/or the device including means for implementing the method as claimed in one of the preceding claims.

10. The device as claimed in the preceding claim, including: - a detection system (31) able to detect a plurality of vehicles (21; 23) present in at least one adjacent lane (11; 13), and to estimate at least one information item, notably speed, relating to each detected vehicle,- a processor (32) able to determine a value representing the speed of the flow of vehicles (v₁; v₃) in the at least one adjacent lane,- a speed arbitration system (33) able to compare the speed of the host vehicle (v₂) with the value representing the speed of the flow of vehicles (v₁; v₃) in each adjacent lane, and to calculate a target speed value for the host vehicle corresponding to the speed of the host vehicle (v₂) less a quantity (Δᵥ),- a human-machine interface (34) able to issue a warning to the driver of the host vehicle.

11. A vehicle including a securing device as claimed in claim 9 or 10
